# EUROPÄISCHE PATENTANMELDUNG

(11) **EP 1 449 927 A2**
(43) Veröffentlichungstag der Anmeldung: **25.08.2004**
(21) Anmeldenummer: 04450031.2
(22) Anmeldetag: 18.02.2004
(51) Int. Cl.: C21B 3/08

(54) **Verfahren und Anlage zur schnellen und trockenen Kühlung von Schlacken von Hochöfen und LD-Stahlwerken mit grossen Jahresleistungen**

(30) Priorität: 20.02.2003 AT 2542003
(71) Anmelder: Hulek, Anton, Dipl.-Ing., A-4040 Linz (AT)
(72) Erfinder: Hulek, Anton, Dipl.-Ing., A-4040 Linz (AT)

(57) **Zusammenfassung**

Verfahren zur trockenen Kühlung und Verarbeitung von flüssiger Hochofen- und LD-Schlacke dadurch gekennzeichnet,dass die flüssige Schlacke geregelt über einen Verteiler auf ein umlaufendes,abfallendes,unteres Plattenband mit erhöhten seitlichen Rändern gegossen und im Anschluss durch ein gleich breites,parallel verlaufendes oberes Plattenband auch von oben in Form einer mitlaufenden Kokille eingeschlossen,rasch abgkühlt,zur Erstarrung gebracht und automatisch abgeworfen wird.

## Beschreibung

Die Erfindung bezieht sich auf ein Verfahren und eine Anlage zur schnellen und trockenen Kühlung von Hüttenschlacken, wie sie beim Betrieb von Hochöfen und LD-Stahlwerken in großen Mengen anfallen, bei dem die Schlacke zu einem kontinuierlichen, breitbandförmigen Strang mit 10 bis 40 mm Dicke gegossen, zur Erstarrung gebracht und abgeworfen wird.

Flüssige Hochofenschlacke wird derzeit fast ausschließlich in Wasserbecken entleert, wo sie sofort zu glasigem Hüttensand erstarrt. Dieser Hüttensand wird später getrocknet und feinst gemahlen. Er kann so als Bestandteil von Portlandzement unmittelbar beigemischt werden.

Nach dem österreichischen Patent "AT 380.490 B" gibt es bereits ein Verfahren zur Trockenkühlung von flüssiger Hochofenschlacke. Sein Nachteil ist eine relativ geringe Leistungsfähigkeit im Vergleich zum großen Ausstoß durch den Hochofen.

Flüssige LD-Schlacke wird immer noch in Gießbeete oder in große Stahlwannen entleert, wo eine langsame Abkühlung erfolgt. Die Weiterverarbeitung durch mechanische Zerkleinerung ist relativ aufwendig. Der Gehalt an Freikalk dieser Schlacke ist relativ groß und stört bei vielen Anwendungen.

LD- und Hochofenschlacke können auch nach dem österreichischen Patent "AT. 406 378 B" trocken gekühlt werden. Die Abkühlung erfolgt aber infolge des großen Querschnittes mit nur einseitiger Wärmeabfuhr durch Wärmeleitung langsam. Es kommt dadurch zu einer kristallinen Erstarrung.

Der Erfindung liegt somit die Aufgabe zugrunde, daß sowohl Hochofenschlacke als auch LD-Schlacke nach Sedimentation des flüssigen Metallanteiles zum Beispiel auf Basis des österreichischen Patentes "AT 409 970 B" geregelt auf die erfindungsgemäße Anlage gegossen wird.

Die Schlacke trifft mittig auf ein unteres umlaufendes Plattenband mit seitlichen Abschlüssen einer Höhe von etwa 10 bis 40 mm auf, das in Bewegungsrichtung ein Gefälle aufweist.
Ca. 1 m in Bewegungsrichtung versetzt folgt ein oberes Plattenband gleicher Breite, welches das untere Plattenband in seinem weiteren Verlauf abdeckt und damit einen geschlossenen Hohlraum in der Art einer mitlaufenden Stranggießkokille bildet.

Der so vorgegebene Hohlraum mit 10 bis 40 mm Dicke wird völlig mit flüssiger Schlacke gefüllt, die nun durch die allseitige Umschließung mit den gekühlten Platten besonders rasch abkühlt, so daß die Umlaufgeschwindigkeit und damit der Ausstoß entsprechend groß gewählt werden dürfen. Bei einer Bandbreite von ca. 1,25 m,. einer Schlackenschichtdicke von ca. 30 mm und einer Umlaufgeschindigkeit von ca. 25 m/min. ergibt sich eine Leistung von ca. 1 Miot/a. Die dafür erforderliche Kokillenlänge liegt bei etwa 30 m.

Die gekühlte Schlacke mit einer gleichmäßigen Dicke von ca. 30 mm erstarrt im Falle einer Hochofenschlacke glasig. Die Schlacke wird gebrochen, gemahlen und für die Erzeugung von Zement weiterverarbeitet. Die großen Wärmespannungen bei der Abkühlung machen die Schlacke gut brechfähig und mahlbar. Diese Schlacke ist gleichwertig mit dem üblichen Hüttensand und hat den Vorteil einer völligen Trockenheit.
Im Falle einer LD-Schlacke wird der obere Dickenbereich zwischen 30 und 40 mm bevorzugt. Es kommt der große Vorteil des geringen Gehaltes an Freikalk infolge der relativ raschen Erstarrung hinzu.
Die Position, wo die Schlacke das obere Plattenband erstmals berührt und damit den Hohlraum zwischen den beiden Plattenbändern voll füllt, führt zum Gießspiegel einer mitlaufenden Kokille. Eine entsprechende Gießspiegelregelung ermöglicht einen geregelten, gleichmäßigen Betrieb z.B. mit Hilfe einer Konditionieranlage nach der österreichischen Patentschrift "AT 409 970 B".

Die Plattenbänder können entweder durch Spritzwasser oder durch eine Innenkühlung rückgekühlt werden.
Im Falle der Spritzwasserkühlung werden die 2 Plattenbänder der Kokille im abfallenden Trum nur von der Rückseite, d.h. der der Schlacke abgekehrten Seite und auf dem ansteigenden Trum ohne Schlacke allseits mit Spritzwasser rückgekühlt.
Im Falle der Innenkühlung wird mit einer Durchlaufkühlung mittels Kühlwasserbohrungen durch die Platten und flexiblen Zwischenverbindungen vorgegangen.

### Zeichnungen:

- Fig.1: zeigt eine Gesamtanlage auf Basis der beschriebenen Erfindung in vereinfachter Darstellung im Längsschnitt.
- Fig. 2: zeigt im Schnittbild A - A den Hohlraum zwischen dem unteren und oberen Kokillenband.
Pos.1 zeigt eine Konditionieranlage für die geregelte Schlackenaufgabe.
Pos.2 zeigt die Verteilerrinne.
Pos.3 zeigt das untere Plattenband
Pos.4 zeigt das obere Plattenband
Pos.5 zeigt den Gießspiegel.
Pos.6 zeigt einen Abwurfkeil.
Pos.7 zeigt den Abtransport der abgeworfenen, erstarrten Schlacke.

Im folgenden ist eine spezielle Ausführungsform der Erfindung beschrieben.

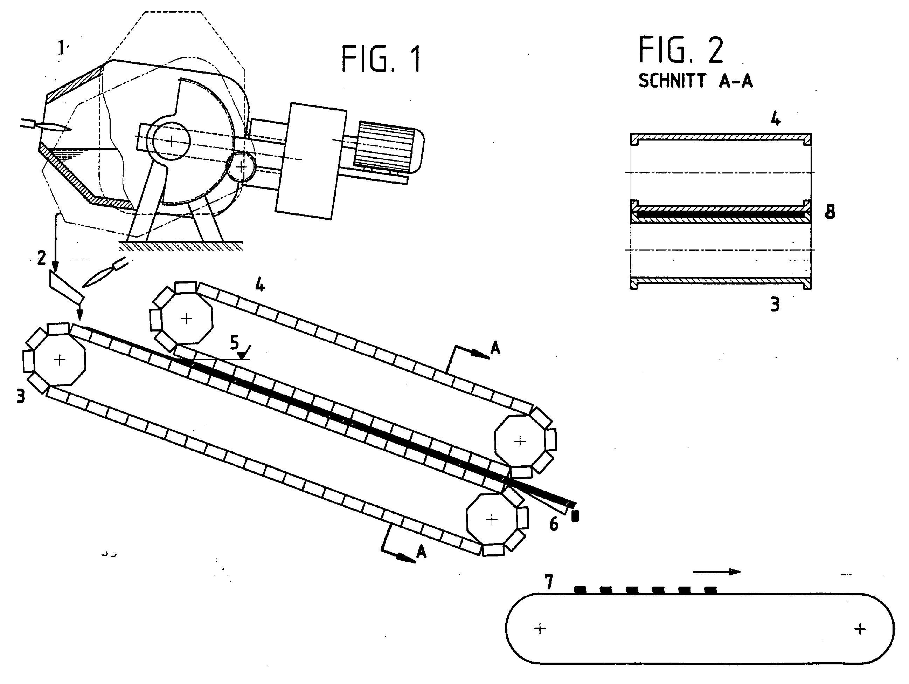

Die in Figur 1 schematisch dargestellte Gesamtanlage gemäß der Erfindung umfaßt eine aus zwei Plattenbändern bestehende mitlaufende Kokille gemäß Pos.3 und 4, ein Zwischengefäß mit Austaufregetung gemäß Pos.1 und einen Verteiler gemäß Pos.2 sowie ein Plattenförderband gemäß Pos. 7 zur Austragung und weiteren Kühlung der abgeworfenen Schlacke.

Das untere Plattenband hat seitlich erhöhte Ränder gemäß Fig.2, Pos.8, welche die Schichtdicke der Schlacke bestimmen.

Die Geschwindigkeit der mitlaufenden Kokille wird so geregelt, daß die Schlacke vor dem Abwurf die nötige Durcherstarrung bei der vorgegebenen Schichtdicke erhält.
Die Beaufschlagung der Kokille mittels Zwischengefäß wird über den Gießspiegel lt. Pos.5 so geregelt, daß dieser in einer leicht einzuhaltenden Toleranz verbleibt.

Das wesentliche Merkmal des Verfahrens und der Anlage ist die mitlaufende Kokille für eine rasche Kühlung der Schlacke. Die Kokille hat eine Neigung von vorzugsweise 30 - 45°. Sie kann aber auch eine größere Neigung bis zu 90° oder eine Neigung unter 30° aufweisen, wenn dies technologisch erforderlich oder räumlich vorteilhaft ist.

## Patentansprüche

1. Verfahren zur trockenen Kühlung und Verarbeitung von flüssiger Hochofen- und LD-Schlacke **dadurch gekennzeichnet, daß** die flüssige Schlacke geregelt über einen Verteiler auf ein umlaufendes, abfallendes, unteres Plattenband mit erhöhten seitlichen Rändern gegossen und im Anschluß durch ein gleich breites, parallel verlaufendes oberes Plattenband auch von oben in Form einer mitlaufenden Kokille eingeschlossen, rasch abgekühlt, zur Erstarrung gebracht und automatisch abgeworfen wird.

2. Verfahren nach Anspruch 1 **dadurch gekennzeichnet, daß** das Aufgießen der Schlacke unter Benützung einer Gießspiegelregelung erfolgt.

3. Anlage zur Durchführung des Verfahrens nach Anspruch 1 und 2 **dadurch gekennzeichnet, daß** die mitlaufende Plattenbandkokille in Bewegungsrichtung ein Gefälle aufweist.

4. Anlage zur Durchführung des Verfahrens nach Anspruch 1 bis 3 **dadurch gekennzeichnet, daß** die 2 Plattenbänder der Kokille auf dem abfallenden Trum nur auf der Rückseite, d.h. der der Schlacke abgekehrten Seite und auf dem ansteigenden Trum ohne Schlacke beiderseits eine Spritzwasserkühlung aufweisen.

5. Anlage zur Durchführung des Verfahrens nach Anspruch 1 bis 3 **dadurch gekennzeichnet, daß** die 2 Plattenbänder der Kokille mittels entsprechender Kühlbohrungen und flexibler Verbindungen von Platte zu Platte eine Innenkühlung aufweisen.
